# EUROPEAN PATENT APPLICATION

(11) **EP 3 824 989 A1**
(43) Date of publication of application: **26.05.2021**
(21) Application number: 19838698.9
(22) Date of filing: 18.07.2019
(51) Int. Cl.: B01D 61/00, C02F 1/44, C08F 16/18

(54) **DRAW SOLUTE, DRAW SOLUTION, AND FORWARD-OSMOSIS WATER TREATMENT METHOD**

(30) Priority: 19.07.2018 JP 2018135471
(71) Applicant: Maruzen Petrochemical Co., Ltd., Tokyo 104-8502 (JP)
(72) Inventor: NISHIURA, Takao, Ichihara-shi, Chiba 290-8503 (JP)
(74) Representative: Blodig, Wolfgang
(86) International application number: PCT/JP2019/028257
(87) International publication number: WO 2020/017588

(57) **Abstract**

Provided is a draw solute which has a low viscosity, can be circulated during a forward-osmosis water treatment, and has a sedimentation under heating and a higher osmotic pressure than that of seawater, when used as a draw solution.

A draw solute comprising at least one of vinyl ether polymer containing an oxyethylene chain in a side chain and having a number average molecular weight (Mn) of 13,000 or less.

## Description

### Technical Field

The present invention relates to a draw solute, a draw solution, and a forward-osmosis water treatment method.

### Background Art

The most common method for producing drinking water is a method including using seawater. As one of the methods for desalinating seawater, an evaporation method and a reverse-osmosis method are widely known.

The evaporation method is a method including heating seawater to generate steam and condensing the steam to yield fresh water. On the other hand, the reverse-osmosis method is a method including separating seawater and fresh water across a semipermeable membrane, and applying a pressure higher than the osmotic pressure to the seawater side to allow water in the seawater to permeate to the freshwater side.

The reverse-osmosis method can produce high-purity fresh water. Meanwhile, in order to permeate water in seawater, a very large pressure needs to be applied. Accordingly, there is a problem that the amount of energy to be consumed is large.

Therefore, a forward-osmosis method, which is capable of producing water with lower energy than that for the reverse-osmosis method, has recently been attracting attention as a new producing method for fresh water.

The forward-osmosis method is a method including using an aqueous solution having a higher osmotic pressure than that of seawater as a draw solution, and separating the draw solution and seawater from each other across a forward-osmosis membrane to dehydrate the seawater. In this method, water in seawater is transferred to the draw solution through the forward-osmosis membrane without applying pressure to the seawater, so that water can be produced with lower energy.

As the draw solution, for example, a solution is known in which carbon dioxide and ammonia are dissolved in high concentration (Patent Literature 1). When this draw solution is used, carbon dioxide and ammonia as the draw solute can be removed from the draw solution by heating the draw solution in which fresh water has been drawn. Accordingly, the operation of collecting fresh water is simple.

However, this technique still has a problem that a large amount of energy is required when reusing the carbon dioxide and ammonia removed from the draw solution. In addition, there is a problem that recovered water is not suitable for beverages because ammonia may remain in the recovered water.

As another technique, a technique of using a solution of, for example, an alkali-neutralized polymer having about 5 to 200 kD as a draw solution has been reported (Patent Literature 2). This technique involves ultrafiltration of the polymer from the draw solution in order to recover water drawn in the draw solution.

However, a large amount of the polymer is dissolved in the draw solution, so that the polymer cannot be completely removed from the draw solution only by ultrafiltration. Furthermore, there is a problem that clogging easily occurs during ultrafiltration.

### Citation List

### Patent Literature

Patent Literature 1: JP 2009-539584 W
Patent Literature 2: US 2006/0,011,544 A
Patent Literature 3: JP 2015-47541 A

### Summary of Invention

### Technical Problem

In addition, Patent Literature 3 proposes to use a hydroxybutyl vinyl ether polymer or a methoxyethyl vinyl ether polymer having a number average molecular weight (Mn) of about 20,000 as a draw solute. These are referred to as temperature-responsive vinyl ether polymers, and an aqueous solution of the temperature-responsive vinyl ether polymer causes precipitation of the polymer when heated to a temperature exceeding the lower critical solution temperature.

However, when the polymer described in Patent Document 3 used as a draw solute is circulated by a pump, it found that, in the first place, it cannot be put to practical use as a draw solute in a forward-osmosis water treatment because it has too large viscosity to circulate. In addition, it did not confirm whether it provides sedimentation under heating or a desired osmotic pressure. Accordingly, a temperature-responsive vinyl ether polymer useful as a draw solute has not been found until now.

It is an object of the present invention to provide a draw solute which has a low viscosity, can be circulated during a forward-osmosis water treatment, and has a sedimentation under heating and a higher osmotic pressure than that of seawater, when used as a draw solution.

### Solution to Problem

The present inventors conducted the extensive research to solve the above problems. As a result of that, they found that a vinyl ether polymer containing an oxyethylene chain in the side chain and having a number average molecular weight (Mn) of 13,000 or less is useful as a draw solute used for a forward-osmosis water treatment because it has a low viscosity, can be circulated during a forward-osmosis water treatment, and has a sedimentation under heating and higher osmotic pressure than that of seawater, when used as a draw solution, and hence completed the present invention.

In other words, the present invention provides the following <1> to <9>.
<1> A draw solute containing at least one of vinyl ether polymer containing an oxyethylene chain in the side chain and having a number average molecular weight (Mn) of 13,000 or less.
<2> The draw solute according to <1>, wherein the vinyl ether polymer has a repeating unit represented by the following formula (1). 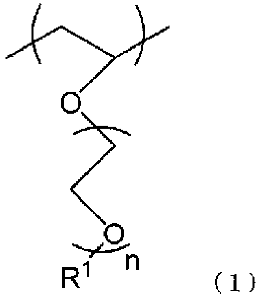 (In the formula (1), n represents 1 to 3 as an average value, and R¹ represents an alkyl group having 1 to 3 carbon atoms.)
<3> The draw solute according to <1> or <2>, wherein the vinyl ether polymer has one or more kinds of repeating units selected from a repeating unit derived from methoxyethyl vinyl ether, a repeating unit derived from ethoxyethyl vinyl ether, a repeating unit derived from ethoxyethoxyethyl vinyl ether and a repeating unit derived from methoxyethoxyethoxyethyl vinyl ether.
<4> The draw solute according to any one of <1> to <3>, wherein the vinyl ether polymer has a number average molecular weight (Mn) of 700 to 5,000.
<5> A draw solution containing the draw solute according to any one of <1> to <4> and water.
<6> The draw solution according to <5>, wherein the content of the draw solute is 40 to 90% by mass in the draw solution, and the content of water is 10 to 60% by mass in the draw solution.
<7> A forward-osmosis water treatment method, including using the draw solute according to any one of <1> to <4> or the draw solution according to <5> or <6>.
<8> A forward-osmosis water treatment method, including an osmosis step of bringing target water to be treated into contact with the first surface of a forward-osmosis membrane, the forward-osmosis membrane having the first surface and a second surface, and bringing the draw solute according to any one of <1> to <4> or the draw solution according to <5> or <6> into contact with the second surface of the forward-osmosis membrane to transfer water from target water to be treated to the draw solute or the draw solution through the forward-osmosis membrane, and a separation step of separating the draw solute and the water from each other contained in a second draw solution obtained by heating the second draw solution through the osmosis step.
<9> The forward-osmosis water treatment method according to <8>, wherein the heating temperature in the separation step is higher than the lower critical solution temperature of the draw solute by 5 to 15°C.

### Advantageous Effects of Invention

The draw solute of the present invention is useful for a forward-osmosis water treatment because it has a low viscosity, can be circulated during a forward-osmosis water treatment, and has a sedimentation under heating and a higher osmotic pressure than that of seawater, when used as a draw solution. In addition, the draw solution of the present invention is useful for a forward-osmosis water treatment because it has a low viscosity, can be circulated during a forward-osmosis water treatment, and has a sedimentation under heating and a higher osmotic pressure than that of seawater.

Therefore, according to the forward-osmosis water treatment method of the present invention, fresh water can be simply and efficiently produced.

### Brief Description of Drawings

Fig. 1 is an illustration showing a forward-osmosis water treatment apparatus used in Test Example 6.
Fig. 2 is a graph showing the amount of water transferred from a sodium chloride aqueous solution to a draw solution in Test Example 6.

### Description of Embodiments

### [Draw solute]

A draw solute of the present invention contains at least one of vinyl ether polymer containing an oxyethylene chain in the side chain and having a number average molecular weight (Mn) of 13,000 or less. The draw solute of the present invention may contain only one kind of such vinyl ether polymer or may contain two or more kinds thereof.

The "draw solute" refers to a solute of a draw solution used for subjecting target water to be treated to a forward-osmosis water treatment.

The vinyl ether polymer used in the present invention preferably has an oxyethylene chain as the repeating unit in the side chain. As the repeating unit of an oxyethylene chain in the side chain, a repeating unit represented by the following formula (1) is preferable. The vinyl ether polymer may have only one kind of repeating unit containing an oxyethylene chain in the side chain, or may have two or more kinds thereof. 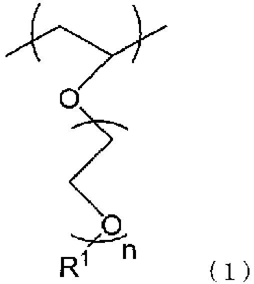 (In the formula (1), n represents 1 to 3 as an average value, and R¹ represents an alkyl group having 1 to 3 carbon atoms.)

In the formula (1), the number of carbon atoms in the alkyl group represented by R¹ is 1 to 3, preferably 1 or 2. The alkyl group may be linear or branched, and specific examples thereof include a methyl group, an ethyl group, an n-propyl group and an isopropyl group. Among them, the alkyl group is preferably a methyl group or an ethyl group.

n represents 1 to 3 as an average value. This average value can be measured by NMR.

Examples of a monomer for deriving the vinyl ether repeating unit having an oxyethylene chain in the side chain include methoxyethyl vinyl ether, ethoxyethyl vinyl ether, methoxyethoxyethyl vinyl ether, ethoxyethoxyethyl vinyl ether, methoxyethoxyethoxyethyl vinyl ether and ethoxyethoxyethoxyethyl vinyl ether. Of these, one kind may be used alone, or two or more kinds may be used in combination.

Among them, from the viewpoint that the LCST can be controlled to 100°C or lower, methoxyethyl vinyl ether, ethoxyethyl vinyl ether, ethoxyethoxyethyl vinyl ether and methoxyethoxyethoxyethyl vinyl ether are preferable, and from the viewpoints of application to a circulation type forward-osmosis water treatment, the efficiency of drawing in water and the efficiency of separating water from the polymer, ethoxyethyl vinyl ether and methoxyethoxyethoxyethyl vinyl ether are more preferable.

From the viewpoints of application to a circulation type forward-osmosis water treatment, the efficiency of drawing in water and the efficiency of separating water from the polymer, the content of repeating unit having an oxyethylene chain in the side chain is preferably 70 to 100% by mass, more preferably 80 to 99.9% by mass, still more preferably 90 to 99.5% by mass, particularly preferably 95 to 99% by mass in all repeating units in the vinyl ether polymer.

The content of each repeating unit in the vinyl ether polymer can be measured by NMR.

The vinyl ether polymer used in the present invention may be a homopolymer composed of one kind of repeating unit or a copolymer composed of two or more kinds of repeating units. The copolymer may be a random copolymer or a block copolymer. Examples of the block copolymer include a diblock type or triblock type block copolymer.

The draw solute of the present invention may contain only one kind of vinyl ether polymer or may contain two or more kinds thereof. The LCST can be appropriately controlled using a copolymer or a mixture of two or more kinds.

The vinyl ether polymer used in the present invention may have a repeating unit other than the repeating unit having an oxyethylene chain in the side chain (hereinafter, also referred to as "other repeating unit"). Examples of the other repeating unit include a repeating unit represented by the following formula (2). 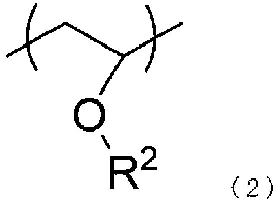 (In the formula (2), R² represents a hydrocarbon group.)

Examples of the hydrocarbon group represented by R² include an alkyl group, a cycloalkyl group, a bridged ring hydrocarbon group and an aryl group. Among them, an alkyl group and a cycloalkyl group are preferable, and an alkyl group is particularly preferable.

The number of carbon atoms in the alkyl group represented by R² is preferably 1 to 20, more preferably 1 to 12, particularly preferably 1 to 6. The alkyl group may be linear or branched, and specific examples of the alkyl group include a methyl group, ethyl group, n-propyl group, isopropyl group, n-butyl group, isobutyl group, sec-butyl group, tert-butyl group, pentyl group and hexyl group.

The number of carbon atoms in the cycloalkyl group represented by R² is preferably 3 to 6. Specific examples of the cycloalkyl group include a cyclopropyl group and a cyclohexyl group. The number of carbon atoms in the bridged ring hydrocarbon group is preferably 6 to 12. Specific examples of the bridged ring hydrocarbon group include an isobornyl group and a tricyclodecanyl group. The number of carbon atoms in the aryl group is preferably 6 to 12. Specific examples of the aryl group include a phenyl group.

Examples of a monomer for deriving the other repeating unit include methyl vinyl ether, ethyl vinyl ether, propyl vinyl ether, normal butyl vinyl ether, cyclohexyl vinyl ether and tricyclodecanyl vinyl ether. Of these, one kind may be used alone, or two or more kinds may be used in combination.

From the viewpoints of application to a circulation type forward-osmosis water treatment, the efficiency of drawing in water and the efficiency of separating water from the polymer, the content of other repeating unit is preferably 0 to 30% by mass, more preferably 0.1 to 20% by mass, still more preferably 0.5 to 10% by mass, particularly preferably 1 to 5% by mass in all repeating units in the vinyl ether polymer.

The number average molecular weight (Mn) of the vinyl ether polymer used in the present invention is 13,000 or less. When the number average molecular weight (Mn) is more than 13,000, in the first place, it cannot be put to practical use as the draw solute in a forward-osmosis water treatment, because the viscosity becomes so high that it becomes difficult to incorporate the draw solution into a circulation apparatus.

From the viewpoints of application to a circulation type forward-osmosis water treatment, the efficiency of drawing in water and the efficiency of separating water from the polymer, the number average molecular weight (Mn) is preferably 500 or more, more preferably 700 or more, still more preferably 1000 or more, still more preferably 1,100 or more, still more preferably 1,250 or more, still more preferably 1,300 or more, particularly preferably 1,500 or more, and also preferably 10,000 or less, more preferably 5,000 or less, still more preferably 2,500 or less, particularly preferably 2,000 or less. When the number average molecular weight (Mn) is 700 or more, the sedimentation under heating is improved and the efficiency of separating water from the polymer is enhanced. In addition, when it is 5,000 or less, the application to a circulation type forward-osmosis water treatment becomes easier.

The molecular weight distribution (Mw/Mn) is preferably 1.0 to 2.5, more preferably 1.0 to 2.0.

The number average molecular weight (Mn) and the molecular weight distribution (Mw/Mn) can be measured by GPC. Specifically, the measurement may be performed by the method described in Examples.

From the viewpoints of application to a circulation type forward-osmosis water treatment, the efficiency of drawing in water and the efficiency of separating water from the polymer, the viscosity at 20°C when the vinyl ether polymer used in the present invention is as an 80% by mass aqueous solution is preferably 25 to 200 mPa·s, more preferably 50 to 150 mPa·s, still more preferably 72.5 to 135 mPa·s, still more preferably 95 to 125 mPa·s, particularly preferably 100 to 115 mPa·s.

The viscosity is a viscosity at 20°C of a solution composed of 80 parts by mass vinyl ether polymer used in the present invention and 20 parts by mass water, and can be specifically measured by the method described in Examples.

From the viewpoint of the efficiency of drawing in water, the osmotic pressure when the vinyl ether polymer used in the present invention is as a 60% by mass aqueous solution is preferably more than 2.5 MPa and 20 MPa or less, more preferably 3 to 18 MPa, still more preferably 5 to 16 MPa, still more preferably 6 to 14 MPa, particularly preferably 7 to 12 MPa.

The osmotic pressure is an osmotic pressure of a solution composed of 60 parts by mass vinyl ether polymer used in the present invention and 40 parts by mass water, and can be specifically measured by the method described in Examples.

From the viewpoint of minimizing the energy required for sedimentation of the polymer, the LCST (lower critical solution temperature) of the vinyl ether polymer used in the present invention is preferably 10 to 100°C, more preferably 15 to 95°C, still more preferably 20 to 90°C, particularly preferably 25 to 85°C.

The LCST (lower critical solution temperature) can be measured by the method described in Examples.

The vinyl ether polymer may be a commercially available product or may be produced by appropriately combining conventional methods. As the method for polymerizing the vinyl ether polymer used in the present invention, cationic polymerization is preferable.

A polymerization initiator used for the cationic polymerization is not particularly limited as long as it advances cationic polymerization, but examples of the polymerization initiator include metal-based initiators such as alkylaluminum; semi-metal-based initiators such as boron trifluoride diethyl ether; non-metal-based initiators such as hydrochloride etherate.

The cationic polymerization reaction is preferably performed in the presence of an organic solvent. Examples of the organic solvent include aromatic hydrocarbon-based solvents such as benzene, toluene, xylene; aliphatic hydrocarbon-based solvents such as propane, n-butane, isobutane, n-pentane, isopentane, n-hexane; halogenated hydrocarbon-based solvents such as methylene chloride and ethylene chloride; ether-based solvents such as diethyl ether, dibutyl ether, tetrahydrofuran, dioxane. Of these organic solvents, one kind may be used alone, or two or more kinds may be used in combination.

Among these organic solvents, aromatic hydrocarbon-based solvents are preferable, and toluene is particularly preferable.

In addition, alcohol may be added to the solvent in advance. Adding alcohol can generate a growth reaction and a termination reaction in parallel, reduce the molecular weight, and provide a polymer having a narrow molecular weight distribution. In addition, changing the kind of alcohol to be added can control the water solubility of the polymer, and as a result, can control the LCST.

The above alcohol is roughly classified into monohydric alcohol and polyhydric alcohol. Examples of the monohydric alcohol include methanol, ethanol, propanol, butanol, pentanol and hexanol. Examples of the polyhydric alcohol include dihydric alcohol such as methyl cellosolve and 1,4-butanediol; trihydric alcohol such as glycerin.

The amount of alcohol used is usually 0.01 to 0.5 mol, preferably 0.02 to 0.4 mol, particularly preferably 0.03 to 0.3 mol, with respect to 1 mol of the vinyl ether monomer.

The polymerization temperature in this polymerization reaction may be appropriately adjusted depending on the kinds of, for example, polymerization initiator, monomer and solvent, but is usually -80°C to 150°C, preferably - 50°C to 100°C, particularly preferably -20°C to 80°C. The polymerization time may be appropriately adjusted depending on the kinds of polymerization initiator, monomer and solvent and the reaction temperature, but is usually about 10 minutes to about 10 hours. The polymerization reaction can be performed by either a batch method or a continuous method.

The draw solute may include, in addition to the vinyl ether polymer obtained as described above, for example, a vinyl ether polymer having no oxyethylene chain in the side chain (specifically, poly(normal butyl vinyl ether), for example).

The content of vinyl ether polymer used in the present invention is preferably 85 to 100% by mass, more preferably 90 to 100% by mass, particularly preferably 95 to 100% by mass in the draw solute of the present invention.

### [Draw solution]

The draw solution of the present invention contains the draw solute of the present invention and water. In this way, adding water to the draw solute of the present invention lowers the viscosity, leading to a viscosity more suitable for circulation during a forward-osmosis water treatment.

The "draw solution" refers to an aqueous solution that draws in water from target water to be treated by a forward-osmosis water treatment.

The content of the draw solute of the present invention is not particularly limited, but is preferably 30 to 95% by mass, more preferably 40 to 90% by mass, still more preferably 45 to 85% by mass, particularly preferably 50 to 80% by mass in the draw solution of the present invention.

The content of water is not particularly limited, but is preferably 5 to 70% by mass, more preferably 10 to 60% by mass, still more preferably 15 to 55% by mass, particularly preferably 20 to 50% by mass in the draw solution of the present invention.

In particular, when the content of the draw solute of the present invention is 40% by mass or more, or when the content of water is 60% by mass or less, the osmotic pressure increases so that the efficiency of drawing in water is greatly improved.

From the viewpoints of application to a circulation type forward-osmosis water treatment, the efficiency of drawing in water and the efficiency of separating water from the polymer, the viscosity at 20°C of the draw solution of the present invention is preferably 25 to 200 mPa·s, more preferably 50 to 150 mPa·s, still more preferably 72.5 to 135 mPa·s, still more preferably 95 to 125 mPa·s, particularly preferably 100 to 115 mPa·s.

The viscosity can be measured by the method described in Examples.

From the viewpoint of the efficiency of drawing in water, the osmotic pressure of the draw solution of the present invention is preferably more than 2.5 MPa and 20 MPa or less, more preferably 3 to 18 MPa, still more preferably 5 to 16 MPa, still more preferably 6 to 14 MPa, particularly preferably 7 to 12 MPa.

The osmotic pressure can be measured by the method described in Examples.

### [Forward-osmosis water treatment method]

The forward-osmosis water treatment method of the present invention is characterized by using the draw solute of the present invention or the draw solution of the present invention. Specifically, provided is a method including an osmosis step of transferring water in target water to be treated to the draw solute of the present invention or the draw solution of the present invention through a forward-osmosis membrane, and a separation step of separating the draw solute and water from each other contained in a second draw solution obtained by the osmosis step.

### (Osmosis step)

As the osmosis step, a step is preferable of bringing target water to be treated into contact with a first surface of a forward-osmosis membrane, the forward-osmosis membrane having the first surface and a second surface, and bringing the draw solute of the present invention or the draw solution of the present invention into contact with the second surface of the forward-osmosis membrane to transfer water from the target water to be treated to the draw solute or the draw solution through the forward-osmosis membrane.

The target water to be treated includes seawater, wastewater and sewage.

Various publicly known membranes can be used as the forward-osmosis membrane, and examples of the membrane include a polyamide-based semipermeable membrane and a cellulose-based hollow fiber membrane. Water in target water to be treated can be drawn in by disposing the target water to be treated and the draw solute of the present invention or the draw solution of the present invention across the forward-osmosis membrane without applying a large pressure.

In the osmosis step, it is preferable to circulate target water to be treated and the draw solute of the present invention or the draw solution of the present invention separated from each other across the forward-osmosis membrane in the system. Circulating in this way can increase the chances of contact between the liquid and the membrane, reduce the concentration polarization, and accelerate the drawing in of water from target water to be treated. The circulation can be performed using, for example, a pump.

The specific method for circulating target water to be treated includes a method for flowing target water to be treated into a first chamber provided in contact with the first surface of the forward-osmosis membrane to bring the target water to be treated into contact with the first surface of the forward-osmosis membrane, and guiding the target water to be treated flowing out through the outlet provided in the first chamber to the circulation path to return to the first chamber. The circulating flow rate is preferably 0.1 to 100 L per 1 L of the first chamber for 1 minute.

The specific method for circulating the draw solute of the present invention or the draw solution of the present invention includes a method for flowing the draw solute of the present invention or the draw solution of the present invention into a second chamber provided in contact with the second surface of a forward-osmosis membrane to bring the draw solute or the draw solution into contact with the second surface of the forward-osmosis membrane, and guiding the draw solute or the draw solution flowing out through the outlet provided in the second chamber to the circulation path to return to the second chamber. The circulating flow rate is preferably 0.1 to 100 L per 1 L of the second chamber for 1 minute.

### (Separation step)

The separation step is preferably a step of heating the second draw solution obtained by the osmosis step to separate the draw solute and water from each other contained in the second draw solution.

From the viewpoint of the energy efficiency and the sedimentation rate under heating, the heating temperature in the separation step is preferably a temperature higher than the lower critical solution temperature (LCST) of the draw solute, more preferably higher than the lower critical solution temperature (LCST) of the draw solute by 5 to 15°C.

In the separation step, in addition to the separation by heating, membrane separation, centrifugation, or separation by an oil/water separator may be used together.

Desired water such as fresh water can be obtained by recovering water separated from the draw solute according to a conventional method.

### Examples

Hereinafter, a detailed description is made of the present invention with reference to Examples, but the present invention is not limited to the Examples. In the Examples, the number average molecular weight (Mn) and the molecular weight distribution (Mw/Mn) of the polymer were determined from the results of GPC molecular weight analysis (in terms of polystyrene).

### (GPC)

Apparatus: "HLC-8320GPC" manufactured by Tosoh Corporation
Detector: RI detector
Mobile layer: Tetrahydrofuran
Flow rate: 1 mL/min
Column: "Shodex LF-804" x 3 manufactured by Showa Denko K.K.
Column temperature: 40°C

### [Synthesis Example 1 Synthesis of (PMOVE-ME)]

Into a 300 mL separable flask, 10 mL of toluene, 1.45 mL of methanol and 0.99 mL of a solution of 0.1 M boron trifluoride diethyl ether complex in toluene were fed, followed by heating until the internal temperature reached 45°C. After confirming that the internal temperature reached 45°C, 48.81 mL of 2-methoxyethyl vinyl ether (hereinafter, MOVE) was added dropwise at a rate of 0.5 mL/min. After completion of the dropwise addition, the mixture was stirred for 2 hours, and then 2 mL of 1 M ammonia/methanol solution was added to deactivate boron trifluoride diethyl ether complex as the catalyst. The reaction solution was concentrated using an evaporator to isolate a polymer. The number average molecular weight (Mn) of the obtained polymer was 1,289, and the molecular weight distribution (Mw/Mn) was 1.26.

### [Synthesis Example 2 Synthesis of (PMOVE-ET)]

Polymerization was performed in the same manner as in Synthesis Example 1 except that the kind of alcohol added together with toluene and the amount thereof were changed to ethanol and 2.09 mL, respectively. The number average molecular weight (Mn) of the obtained polymer was 944, and the molecular weight distribution (Mw/Mn) was 1.14.

### [Synthesis Example 3 Synthesis of (PMOVE-PR)]

Polymerization was performed in the same manner as in Synthesis Example 1 except that the kind of alcohol added together with toluene and the amount thereof were changed to 1-propanol and 2.68 mL, respectively. The number average molecular weight (Mn) of the obtained polymer was 1,045, and the molecular weight distribution (Mw/Mn) was 1.18.

### [Synthesis Example 4 Synthesis of (PMOVE-BU)]

Polymerization was performed in the same manner as in Synthesis Example 1 except that the kind of alcohol added together with toluene and the amount thereof were changed to 1-butanol and 3.27 mL, respectively. The number average molecular weight (Mn) of the obtained polymer was 1,502, and the molecular weight distribution (Mw/Mn) was 1.44.

### [Synthesis Example 5 Synthesis of (PMOVE-HE)]

Polymerization was performed in the same manner as in Synthesis Example 1 except that the type and amount of alcohol added together with toluene were changed to 1-hexanol and 4.48 mL, respectively. The number average molecular weight (Mn) of the obtained polymer was 1,276, and the molecular weight distribution (Mw/Mn) was 1.34.

### [Synthesis Example 6 Synthesis of (PMOVE-MECE)]

Polymerization was performed in the same manner as in Synthesis Example 1 except that the kind of alcohol added together with toluene and the amount thereof were changed to methyl cellosolve (2-methoxyethanol) and 2.82 mL, respectively. The number average molecular weight (Mn) of the obtained polymer was 1,116, and the molecular weight distribution (Mw/Mn) was 1.19.

### [Synthesis Example 7 Synthesis of (PMOVE-BUDI)]

Polymerization was performed in the same manner as in Synthesis Example 1 except that the kind of alcohol added together with toluene and the amount thereof were changed to 1,4-butanediol and 3.19 mL, respectively. The number average molecular weight (Mn) of the obtained polymer was 1,232, and the molecular weight distribution (Mw/Mn) was 1.67.

### [Synthesis Example 8 Synthesis of (PMOVE-GL)]

Polymerization was performed in the same manner as in Synthesis Example 1 except that the kind of alcohol added together with toluene and the amount thereof were changed to glycerin and 2.61 mL, respectively. The number average molecular weight (Mn) of the obtained polymer was 1,014, and the molecular weight distribution (Mw/Mn) was 1.73.

### [Synthesis Example 9 Synthesis of (PEOVE-ET)]

Into a 300 mL separable flask, 10 mL of toluene, 2.08 mL of ethanol and 0.99 mL of a solution of 0.1 M boron trifluoride diethyl ether complex in toluene were fed, followed by heating until the internal temperature reached 45°C. After confirming that the internal temperature reached 45°C, 56.12 mL of 2-ethoxyethyl vinyl ether (hereinafter, EOVE) was added dropwise at a rate of 0.5 mL/min. After completion of the dropwise addition, the mixture was stirred for 2 hours, and then 2 mL of 1 M ammonia/methanol solution was added to deactivate boron trifluoride diethyl ether complex as the catalyst. The reaction solution was concentrated using an evaporator to isolate a polymer. The number average molecular weight (Mn) of the obtained polymer was 1,101, and the molecular weight distribution (Mw/Mn) was 1.20.

### [Synthesis Example 10 Synthesis of (PEOEOVE-ET)]

Polymerization was performed in the same manner as in Synthesis Example 9 except that the kind of added vinyl ether and the amount thereof were changed to [2-(2-ethoxyethoxy)ethyl] vinyl ether (hereinafter, EOEOVE) and 76.58 mL, respectively. The number average molecular weight (Mn) of the obtained polymer was 1,528, and the molecular weight distribution (Mw/Mn) was 1.19.

### [Synthesis Example 11 Synthesis of (PTEGMVE-ET)]

Polymerization was performed in the same manner as in Synthesis Example 9 except that the kind of added vinyl ether and the amount thereof were changed to methoxyethoxyethoxyethyl vinyl ether (hereinafter, TEGMVE) and 80.66 mL, respectively. The number average molecular weight (Mn) of the obtained polymer was 1,505, and the molecular weight distribution (Mw/Mn) was 1.20.

### [Synthesis Example 12 Synthesis of (PEOVE-PTEGMVE-ET)]

Into a 300 mL separable flask, 10 mL of toluene, 2.08 mL of ethanol and 0.99 mL of a solution of 0.1 M boron trifluoride diethyl ether complex in toluene were fed, followed by heating until the internal temperature reached 45°C. After confirming that the internal temperature reached 45°C, a mixed solution of 28.06 mL of EOVE and 40.33 mL of TEGMVE was added dropwise at a rate of 0.5 mL/min. After completion of the dropwise addition, the mixture was stirred for 2 hours, and then 2 mL of 1 M ammonia/methanol solution was added to deactivate boron trifluoride diethyl ether complex as the catalyst. The reaction solution was concentrated using an evaporator to isolate a polymer. The number average molecular weight (Mn) of the obtained polymer was 1,447, and the molecular weight distribution (Mw/Mn) was 1.21.

### [Synthesis Example 13 Synthesis of (PEOVE-PTEGMVE-BU)]

Polymerization was performed in the same manner as in Synthesis Example 12 except that the kind of alcohol added together with toluene and the amount thereof were changed to 1-butanol and 3.27 mL, respectively. The number average molecular weight (Mn) of the obtained polymer was 1,474, and the molecular weight distribution (Mw/Mn) was 1.18.

### [Synthesis Example 14 Synthesis of (PnBVE-PTEGMVE-ET)]

Into a 300 mL separable flask, 10 mL of toluene, 2.08 mL of ethanol and 0.99 mL of a solution of 0.1 M boron trifluoride diethyl ether complex in toluene were fed, followed by heating until the internal temperature reached 45°C. After confirming that the internal temperature reached 45°C, a mixed solution of 76.62 mL of TEGMVE and 2.70 mL of normal butyl vinyl ether (hereinafter, nBVE) was added dropwise at a rate of 0.5 mL/min. After completion of the dropwise addition, the mixture was stirred for 2 hours, and then 2 mL of 1 M ammonia/methanol solution was added to deactivate boron trifluoride diethyl ether complex as the catalyst. The reaction solution was concentrated using an evaporator to isolate a polymer. The number average molecular weight (Mn) of the obtained polymer was 1,365, and the molecular weight distribution (Mw/Mn) was 1.19.

### [Synthesis Example 15 Synthesis of (PnBVE-PTEGMVE-BU)]

Polymerization was performed in the same manner as in Synthesis Example 14 except that the kind of alcohol added together with toluene and the amount thereof were changed to 1-butanol and 3.27 mL, respectively. The number average molecular weight (Mn) of the obtained polymer was 1,589, and the molecular weight distribution (Mw/Mn) was 1.19.

### [Synthesis Example 16 Synthesis of (HPMOVE-ME)]

A 100 mL four-necked flask was flamed with a heat gun under reduced pressure to remove the adsorbed water in the flask. Then, the flask was cooled and filled with nitrogen. This operation was repeated 3 times, and the system was put under a nitrogen atmosphere. Next, through the three-way cock, 48.3 mL of super-dehydrated toluene and 10.3 mL of super-dehydrated ethyl acetate were fed using a syringe, and through the ball tap, 0.124 mL of isobutyl ethyl acetate was fed. The mixture was stirred until the temperature inside the flask was around -5°C. After confirming that the temperature was around -5°C, 1.54 mL of ethylaluminum sesquichloride was fed through the three-way cock to cause chlorination. Then, 2-methoxyethyl vinyl ether was added to initiate the reaction. After confirming that the conversion was 98% or more by GC measurement, the reaction was terminated and neutralized by adding 5 mL of a 1 M NaOCH₃/methanol solution. Then, a predetermined amount of ion exchange resin (MSPS2) was added, and the mixture was stirred overnight. After confirming that the reaction solution was in the vicinity of neutrality (weakly acidic) with pH test paper, filtration was performed with laid Celite. Then, the solvent was distilled off to yield a polymer. The number average molecular weight (Mn) of the obtained polymer was 14,780, and the molecular weight distribution (Mw/Mn) was 1.21.

### [Synthesis Example 17 Synthesis of (poly(OH-Bu))]

Into a 100 mL four-necked flask, 12.9 g of ion-exchanged water and 30.0 g of hydroxybutyl vinyl ether (HBVE) were fed. Oxygen in the system was removed by nitrogen bubbling. Next, 0.12 g of 2,2'-azobis(methyl isobutyrate) (MAIB) was fed, and heating was performed until the internal temperature reached 60°C. After confirming that the temperature was 60°C, when the conversion of hydroxybutyl vinyl ether reached 85%, the heating was terminated, and the mixture was allowed to stand until the temperature reached room temperature. Then, the solvent and the residual monomer were distilled off under reduced pressure to yield a polymer. The number average molecular weight (Mn) of the obtained polymer was 16,530, and the molecular weight distribution (Mw/Mn) was 1.73.

Table 1 shows the number average molecular weight (Mn) and the molecular weight distribution (Mw/Mn) of the polymers obtained in Synthesis Examples 1 to 17.

**[Table 1]**

| | Monomer | Added alcohol | Number average molecular weight (Mn) | Molecular weight distribution (Mw/Mn) |
|---|---|---|---|---|
| Synthesis Example 1 | MOVE | methanol | 1289 | 1.26 |
| Synthesis Example 2 | MOVE | ethanol | 944 | 1.14 |
| Synthesis Example 3 | MOVE | propanol | 1045 | 1.18 |
| Synthesis Example 4 | MOVE | butanol | 1502 | 1. 44 |
| Synthesis Example 5 | MOVE | hexanol | 1276 | 1. 34 |
| Synthesis Example 6 | MOVE | methyl cellosolve | 1116 | 1.19 |
| Synthesis Example 7 | MOVE | 1,4-butanediol | 1232 | 1.67 |
| Synthesis Example 8 | MOVE | glycerin | 1014 | 1. 73 |
| Synthesis Example 9 | EOVE | ethanol | 1101 | 1.20 |
| Synthesis Example 10 | EOEOVE | ethanol | 1528 | 1.19 |
| Synthesis Example 11 | TEGMVE | ethanol | 1505 | 1.20 |
| Synthesis Example 12 | EOVE/TEGMVE | ethanol | 1447 | 1.21 |
| Synthesis Example 13 | EOVE/TEGMVE | butanol | 1474 | 1.18 |
| Synthesis Example 14 | n-BVE/TEGMVE | ethanol | 1365 | 1.19 |
| Synthesis Example 15 | n-BVE/TEGMVE | butanol | 1589 | 1.19 |
| Synthesis Example 16 | MOVE | - | 14780 | 1.21 |
| Synthesis Example 17 | HBVE | - | 16530 | 1. 73 |

### [Test Example 1 Viscosity measurement]

The polymers of Synthesis Examples 1 to 17 were adjusted to 80% by mass aqueous solution, and the viscosity at 20°C was measured under the following conditions. The result is shown in Table 2.

### (Viscosity measurement conditions)

Apparatus: MCR301 manufactured by Anton Paar GmbH
Cone plate diameter: 50 mm
Cone plate angle: 1°
Measurement temperature: 20.0°C
Share rate: 10 s⁻¹

### [Test Example 2 Circulation test]

A polymer aqueous solution (80% by mass) prepared in the same manner as in Test Example 1 was circulated using a diaphragm pump (maximum pressure 1 MPa, Pressure Boost Pump CDP8800 manufactured by AQUATEC INTERNATIONAL INC). Then, the presence or absence of circulation was visually checked, and evaluation was made based on the following criteria. The result is shown in Table 2.

### (Circulation test evaluation criteria)

○: Circulation was present
×: Circulation was absent

**[Table 2]**

| | Synthesis Example | Sample name | Viscosity (mPa·s) | Presence or absence of circulation |
|---|---|---|---|---|
| Example 1-1 | 1 | PMOVE-ME | 73 | ○ |
| Example 1-2 | 2 | PMOVE-ET | 63 | ○ |
| Example 1-3 | 3 | PMOVE-PR | 65 | ○ |
| Example 1-4 | 4 | PMOVE-BU | 124 | ○ |
| Example 1-5 | 5 | PMOVE-HE | 91 | ○ |
| Example 1-6 | 6 | PMOVE-MECE | 70 | ○ |
| Example 1-7 | 7 | PMOVE-BUDI | 73 | ○ |
| Example 1-8 | 8 | PMOVE-GL | 116 | ○ |
| Example 1-9 | 9 | PEOVE-ET | 73 | ○ |
| Example 1-10 | 10 | PEOEOVE-ET | 104 | ○ |
| Example 1-11 | 11 | PTEGMVE-ET | 96 | ○ |
| Example 1-12 | 12 | PEOVE-PTEGMVE-ET | 99 | ○ |
| Example 1-13 | 13 | PEOVE-PTEGMVE-BU | 102 | ○ |
| Example 1-14 | 14 | PnBVE-PTEGMVE-ET | 96 | ○ |
| Example 1-15 | 15 | PnBVE-PTEGMVE-BU | 115 | ○ |
| Comparative Example 1 | 16 | HPMOVE-ME | 6781 | × |
| Comparative Example 2 | 17 | poly(OH-Bu) | 63051 | × |

As shown in Table 2, in Examples 1-1 to 1-15, all the viscosities were 150 mPa·s or less, and circulation could be achieved using the pump. On the other hand, in Comparative Examples 1 and 2, the viscosities were 6,781 mPa·s and 63,051 mPa·s, respectively, and circulation could not be achieved using the pump, with the result that Comparative Examples 1 and 2 cannot be used as the draw solute or draw solution.

### [Test Example 3 LCST (lower critical solution temperature) measurement]

The LCSTs of the polymers of Synthesis Examples 1 to 4, 6 to 10 and 12 to 15 were measured under the following conditions using an ultraviolet visible near infrared spectrophotometer (UV-Visible/NIR spectrophotometer) having a temperature adjustment function. In other words, the polymers of Synthetic Examples 1 to 4, 6 to 10 and 12 to 15 were adjusted to a 1% by mass aqueous solution, the temperature was raised at 1°C/min, and the minimum value of the derivative obtained by differentiating the change in transmittance was defined as LCST. The result is shown in Table 3.

### (LCST measurement conditions)

Apparatus: V-650 manufactured by JASCO Corporation
Measurement wavelength: 750 nm
Temperature rising rate: 1°C/min

### [Test Example 4 Sedimentation under heating test]

The polymers of Synthesis Examples 1 to 4, 6 to 10 and 12 to 15 were adjusted to a 50% by mass aqueous solution. Then, separation was performed by putting 7 mL of the aqueous solution in a test tube and leaving it in a hot water bath set at a temperature 5°C higher than the LCST measured in Test Example 3 for 1 hour. From the liquid separated into two layers, a diluted layer and a concentrated layer, the diluted layer was collected using a dropper. The refractive index of the collected liquid was measured by a refractometer (RX-5000CX manufactured by ATAGO), and the concentration of the polymer contained in the diluted layer was calculated from the calibration curve measured in advance. The result is shown in Table 3.

**[Table 3]**

| Example | Synthesis Example | Sample name | LCST (°C) | Test for sedimentation under heating Polymer concentration in diluted layer (% by mass) |
|---|---|---|---|---|
| Example 2-1 | 1 | PMOVE-ME | 85 | 39 |
| Example 2-2 | 2 | PMOVE-ET | 73 | 25 |
| Example 2-3 | 3 | PMOVE-PR | 60 | 21 |
| Example 2-4 | 4 | PMOVE-BU | 40 | 18 |
| Example 2-5 | 6 | PMOVE-MECE | 82 | 32 |
| Example 2-6 | 7 | PMOVE-BUDI | 52 | 19 |
| Example 2-7 | 8 | PMOVE-GL | 49 | 28 |
| Example 2-8 | 9 | PEOVE-ET | 27 | 1 |
| Example 2-9 | 10 | PEOEOVE-ET | 49 | 26 |
| Example 2-10 | 12 | PEOVE-PTEGMVE-ET | 68 | 31 |
| Example 2-11 | 13 | PEOVE-PTEGMVE-BU | 33 | 3 |
| Example 2-12 | 14 | PnBVE-PTEGMVE-ET | 84 | 41 |
| Example 2-13 | 15 | PnBVE-PTEGMVE-BU | 70 | 4 |

As shown in Examples 2-1 to 2-7 in Table 3, all the polymers having a repeating unit derived from MOVE were separated by heating into two layers, a diluted layer and a concentrated layer. It found that the concentration of the diluted layer was lower than that before sedimentation under heating.

It found that the homopolymer derived from EOVE, the homopolymer derived from EOEOVE, the copolymer of EOVE and TEGMVE, and the copolymer of nBVE and TEGMVE were separated by heating into two layers, a diluted layer and a concentrated layer (Examples 2-8 to 2-13).

From the above results, it found that in any vinyl ether polymer aqueous solution of Synthesis Examples 1 to 4, 6 to 10 and 12 to 15, it is possible to generate two-layer separation by heating at a temperature higher than the LCST of the vinyl ether polymer.

### [Test Example 5 Osmotic pressure measurement]

The polymers of Synthesis Examples 1 to 8 and 10 to 15 were adjusted to a 60% by mass aqueous solution, and the osmotic pressure of the aqueous solution was measured by a vapor pressure osmometer (manufactured by Phoenix Science Inc.). The result is shown in Table 4.

**[Table 4]**

| Example | Synthesis Example | Sample name | Osmotic pressure of 60% by mass aqueous solution (MPa) |
|---|---|---|---|
| Example 3-1 | 1 | PMOVE-ME | 7. 3 |
| Example 3-2 | 2 | PMOVE-ET | 6.8 |
| Example 3-3 | 3 | PMOVE-PR | 5. 8 |
| Example 3-4 | 4 | PMOVE-BU | 4.7 |
| Example 3-5 | 5 | PMOVE-HE | 3. 4 |
| Example 3-6 | 6 | PMOVE-MECE | 7.4 |
| Example 3-7 | 7 | PMOVE-BUDI | 4.7 |
| Example 3-8 | 8 | PMOVE-GL | 6.3 |
| Example 3-9 | 10 | PEOEOVE-ET | 3. 7 |
| Example 3-10 | 11 | PTEGMVE-ET | 9.0 or more |
| Example 3-11 | 12 | PEOVE-PTEGMVE-ET | 9.0 or more |
| Example 3-12 | 13 | PEOVE-PTEGMVE-BU | 5.9 |
| Example 3-13 | 14 | PnBVE-PTEGMVE-ET | 9.0 or more |
| Example 3-14 | 15 | PnBVE-PTEGMVE-BU | 9.0 or more |

As shown in Table 4, all the draw solutions of Examples 3-1 to 3-14 have an osmotic pressure higher than the osmotic pressure of seawater (2.5 MPa), and therefore can draw in water from seawater through a semipermeable membrane. In addition, the osmotic pressure increases with a rise in polymer concentration. Therefore, it expected that the osmotic pressure will be further improved by further raising the polymer concentration from 60% by mass.

### [Test Example 6 Forward-osmosis water treatment test]

The polymer of Synthesis Example 2 was adjusted to a 70% by mass aqueous solution. Using this aqueous solution as a draw solution, a draw-in test of water from a 3% by mass sodium chloride aqueous solution was conducted.

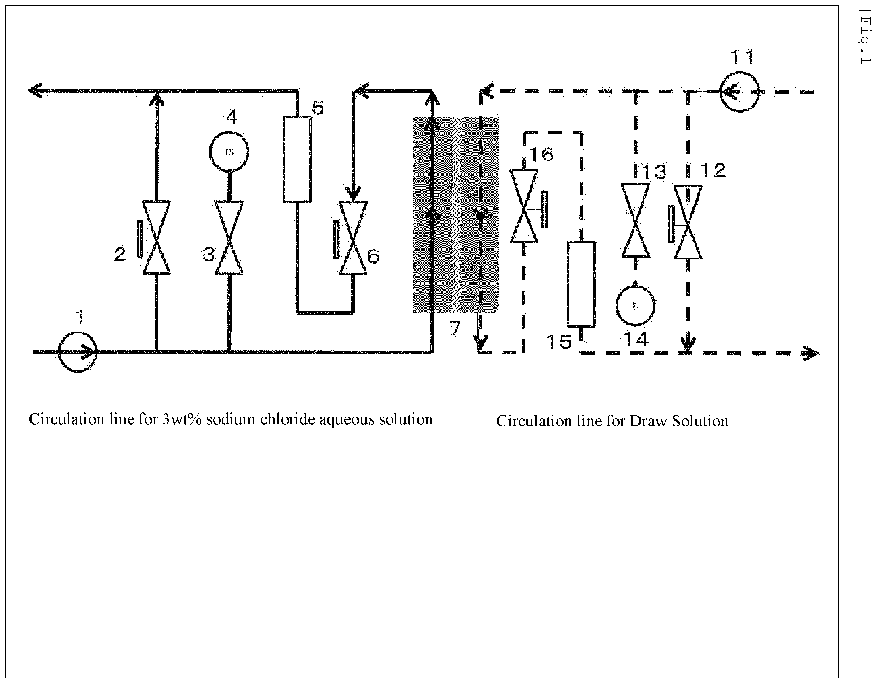

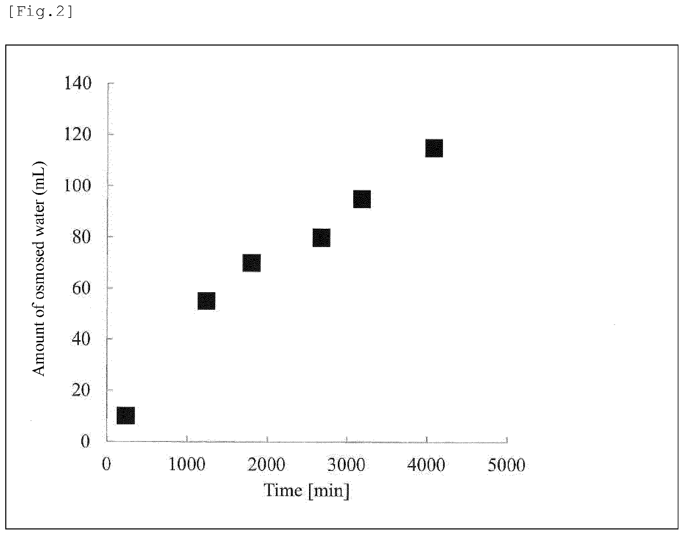

In other words, a jig made of vinyl chloride having two chambers partitioned by a semipermeable membrane (SWC-5 manufactured by Nitto Denko Corporation) was prepared. In one of the chambers partitioned by the semipermeable membrane, a 3% by mass sodium chloride aqueous solution was circulated at a flow rate of 1 L/min, and in the other of the chambers, an aqueous solution of the polymer of Synthesis Example 2 (70% by mass) was circulated at a flow rate of 1 L/min (Fig. 1). The amount of osmosed water was measured after passage of 240 minutes, 1,240 minutes, 1,800 minutes, 2,676 minutes, 3,180 minutes, and 4,080 minutes from the start of circulation. The result is shown in Fig. 2. As shown in Fig. 2, it found that water transferred from the sodium chloride aqueous solution to the draw solution over time.

In addition, the draw solution in which water had been drawn was left in a hot water bath at 80°C for 1 hour to perform a sedimentation under heating test. After the sedimentation under heating test, it visually confirmed that the draw solution was separated into two layers, a diluted layer and a concentrated layer. In addition, when the polymer concentration in the draw solution in which water had been drawn and the polymer concentration in the diluted layer after sedimentation under heating were calculated in accordance with the method described in Test Example 4, the polymer concentration in the diluted layer after sedimentation under heating was 26.4% by mass, which decreases from the 50.0% by mass polymer concentration in the draw solution before heating. Therefore, sedimentation of the polymer due to heating was confirmed.

### Reference Signs List

- 1, 11: Pump
- 2, 12: Flow regulating valve
- 3, 13: Pressure gauge inlet valve
- 4, 14: Pressure gauge
- 5, 15: Flowmeter
- 6, 16: Pressure regulating valve
- 7: Semipermeable membrane

## Claims

1. A draw solute comprising at least one of vinyl ether polymer containing an oxyethylene chain in a side chain and having a number average molecular weight (Mn) of 13,000 or less.

2. The draw solute according to claim 1, wherein the vinyl ether polymer comprises a repeating unit represented by the following formula (1) 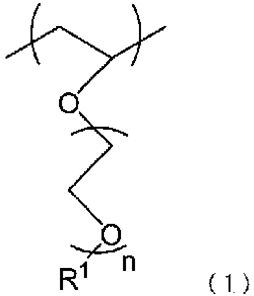 wherein in the formula (1), n represents 1 to 3 as an average value, and R¹ represents an alkyl group having 1 to 3 carbon atoms.

3. The draw solute according to claim 1 or 2, wherein the vinyl ether polymer has one kind or two or more kinds of repeating units selected from the group consisting of a repeating unit derived from methoxyethyl vinyl ether, a repeating unit derived from ethoxyethyl vinyl ether, a repeating unit derived from ethoxyethoxyethyl vinyl ether and a repeating unit derived from methoxyethoxyethoxyethyl vinyl ether.

4. The draw solute according to any one of claims 1 to 3, wherein the vinyl ether polymer has a number average molecular weight (Mn) of 700 to 5,000.

5. A draw solution comprising the draw solute according to any one of claims 1 to 4 and water.

6. The draw solution according to claim 5, wherein a content of the draw solute is 40 to 90% by mass in the draw solution, and a content of water is 10 to 60% by mass in the draw solution.

7. A forward-osmosis water treatment method, comprising using the draw solute according to any one of claims 1 to 4 or the draw solution according to claim 5 or 6.

8. A forward-osmosis water treatment method, comprising
an osmosis step of bringing target water to be treated into contact with a first surface of a forward-osmosis membrane, the forward-osmosis membrane having the first surface and a second surface, and bringing the draw solute according to any one of claims 1 to 4 or the draw solution according to claim 5 or 6 into contact with the second surface of the forward-osmosis membrane to transfer water from target water to be treated to the draw solute or the draw solution through the forward-osmosis membrane, and
a separation step of separating the draw solute and the water from each other contained in a second draw solution obtained by heating the second draw solution through the osmosis step.

9. The forward-osmosis water treatment method according to claim 8, wherein a heating temperature in the separation step is higher than a lower critical solution temperature of the draw solute by 5 to 15°C.
